# FASCICULE DE BREVET EUROPEEN

(11) **EP 3 122 960 B1**
(45) Date de publication et mention de la délivrance du brevet: **02.05.2018**
(21) Numéro de dépôt: 15717562.1
(22) Date de dépôt: 25.03.2015
(51) Int. Cl.: E04H 6/22, B60L 11/18, E04H 6/42

(54) **PARKING SOUTERRAIN POUR VEHICULES ELECTRIQUES**
UNTERIRDISCHES PARKHAUS FÜR ELEKTROFAHRZEUGE
UNDERGROUND CAR PARK FOR ELECTRIC VEHICLES

(30) Priorité: 28.03.2014 FR 1452712
(43) Date de publication de la demande: 01.02.2017
(73) Titulaire: Soletanche Freyssinet, 92500 Rueil Malmaison (FR)
(72) Inventeur: MONLEAU, Stéphane, F-92500 Rueil Malmaison (FR); VIDIL, Emmanuel, F-92500 Rueil Malmaison (FR)
(74) Mandataire: Calvo de Nó, Rodrigo
(86) Numéro de dépôt international: PCT/FR2015/050752
(87) Numéro de publication internationale: WO 2015/145067

(56) Documents cités:
- EP-A1- 2 372 046
- WO-A1-2013/018540
- WO-A1-2014/027506
- JP-A- 2010 070 985

## Description

La présente invention concerne un parking pour véhicules électriques, tels que connu de WO 2014/027506 A1 et JP 2010 070985 A. Un parking selon l'invention est particulièrement adapté pour le parcage de véhicules électriques de location, notamment de location de courte durée.

Certaines villes sont déjà dotées de stations de location de véhicules électriques en libre-service. Ces stations de location permettent aux usagers de choisir un véhicule, de l'utiliser sur une courte ou moyenne durée, puis de le rendre.

Afin d'assurer un minimum d'autonomie à chaque véhicule lors d'une nouvelle utilisation, les stations de location sont généralement munies, à chaque emplacement de parcage, de moyens de recharge électrique, auxquels les véhicules sont systématiquement rebranchés entre deux utilisations.

Ces stations de location mobilisent aujourd'hui des zones importantes de la voirie.

Ce type de service de location étant amené à se développer, il existe un besoin d'augmenter le nombre de véhicules disponibles pour les usagers, sans augmenter encore l'encombrement de la voirie, et tout en garantissant un service efficace aux utilisateurs.

La présente invention a été développée dans ce but.

Un parking souterrain pour véhicules électriques selon l'invention comprend une pluralité d'emplacements de parcage comportant chacun un dispositif d'alimentation électrique, une pluralité d'interfaces de parcage, chaque interface de parcage étant adaptée pour être reliée électriquement à un véhicule de manière à former avec lui un module de parcage, et des moyens automatiques de déplacement de chaque module de parcage entre au moins un emplacement de parcage et une zone utilisateur, le parking étant configuré de sorte que, lorsqu'un module de parcage se trouve sur un emplacement de parcage, l'interface de parcage dudit module est automatiquement connectée électriquement au dispositif d'alimentation électrique de l'emplacement. Le parking est muni d'un système de détection de l'état de charge du véhicule de chaque module de parcage (l'état de charge devant être entendu ici comme l'état de charge électrique du véhicule, généralement exprimé en Ampère-heure).

Le parking selon l'invention est un moyen simple de garer un nombre important de véhicules électriques, tout en réduisant au minimum l'encombrement de la voirie et en permettant aux utilisateurs de prendre aisément possession d'un véhicule avec un état de charge approprié.

Il permet, en outre, d'assurer la recharge des véhicules en permanence pendant la durée de leur stationnement.

Selon un exemple, chaque interface de parcage est munie d'au moins un connecteur électrique primaire adapté pour être relié à un connecteur électrique complémentaire d'un véhicule, notamment manuellement par l'utilisateur.

Pour assurer la liaison électrique entre le véhicule et le dispositif d'alimentation de l'emplacement de parcage, chaque interface de parcage comporte en outre, par exemple, au moins un connecteur électrique secondaire relié électriquement au connecteur primaire, et adapté pour se connecter électriquement au dispositif d'alimentation d'un emplacement de parcage. On comprend que le connecteur électrique secondaire est agencé sur le module de parcage de manière à se retrouver en regard du dispositif d'alimentation électrique de l'emplacement lorsque ledit module est stationné sur l'emplacement.

Selon un exemple, l'interface de parcage comporte des moyens de commande du véhicule auquel elle est connectée contrôlables à distance, notamment depuis une unité centrale de commande du parking. Dans ce cas, le véhicule peut être automatiquement piloté entre les emplacements de parcage et la zone utilisateur par lesdits moyens de commande.

Selon un autre exemple, l'interface de parcage comprend une plateforme de support mobile configurée pour recevoir au moins un véhicule. La plateforme peut être automotrice ou non (dans ce cas, elle est déplacée à l'aide de moyens externes, des vérins par exemple). Le connecteur électrique primaire et/ou le connecteur électrique secondaire sont alors par exemple montés sur une borne solidaire de ladite plateforme. Selon un exemple, le dispositif d'alimentation comprend un connecteur fixe relié à une unité centrale d'alimentation électrique du parking.

Selon un exemple, la zone utilisateur est disposée sur un premier niveau du parking et les emplacements de parcage sont répartis sur au moins un deuxième niveau situé en dessous du premier niveau. Généralement, le premier niveau est situé au niveau de la voirie, pour faciliter la dépose et le retrait des véhicules par les utilisateurs, et les emplacements de parcage sont répartis sur plusieurs niveaux souterrains.

Selon un exemple, le parking comprend un système d'identification de la position et de l'état des interfaces de parcages, notamment des plateformes (état chargé ou non chargé par exemple).

De manière préférentielle, le parking comprend en outre des moyens d'identification du véhicule présentant l'état de charge le plus élevé. Ces dispositions permettent de fournir à chaque nouvel utilisateur un véhicule présentant l'état de charge le plus important.

La présente invention concerne, en outre, un procédé de retrait d'un véhicule électrique stationné dans un parking souterrain comprenant une pluralité de modules de parcage comprenant chacun un véhicule et une interface de parcage connectée électriquement audit véhicule et à un dispositif d'alimentation électrique, dans lequel le véhicule présentant l'état de charge le plus élevé est identifié et le module de parcage comprenant le véhicule identifié comme présentant l'état de charge le plus élevé est déplacé automatiquement depuis un emplacement de parcage jusqu'à une zone utilisateur, l'interface de parcage étant automatiquement déconnectée dudit dispositif d'alimentation électrique lorsque le module de parcage quitte l'emplacement de parcage ; et dans la zone utilisateur, le véhicule est déconnecté de l'interface de parcage.

Selon un exemple particulier de mise en oeuvre, un module de parcage comprenant une plateforme de support équipée d'un connecteur électrique primaire connecté électriquement à un véhicule porté par la plateforme et d'un connecteur électrique secondaire reliés électriquement audit connecteur électrique primaire est déplacée automatiquement depuis un emplacement de parcage du parking jusqu'à une zone utilisateur ; le connecteur électrique secondaire est automatiquement déconnecté d'un dispositif d'alimentation électrique de l'emplacement de parcage lorsque la plateforme quitte l'emplacement de parcage, ce par quoi l'alimentation électrique du véhicule est stoppée ; et dans la zone utilisateur, le véhicule est déconnecté du connecteur électrique primaire et dégagé de la plateforme de support.

D'autres caractéristiques et avantages de l'invention ressortiront à la lecture de la description suivante d'un exemple de réalisation de l'invention donné à titre illustratif et non limitatif. Cette description fait référence aux feuilles de dessins annexés sur lesquelles :
- la figure 1 est une vue en coupe axiale d'un parking souterrain selon un exemple de la présente invention,
- La figure 2 est une vue de dessus du parking, partiellement arrachée, montrant notamment l'agencement d'un niveau souterrain du parking,
- la figure 3 est une vue en perspective d'un module de parcage selon l'invention, ainsi que d'un emplacement de parcage sur lequel vient se stationner ledit module,
- la figure 4 est une vue en perspective, de dessus, partiellement arrachée, du parking de la figure 1.

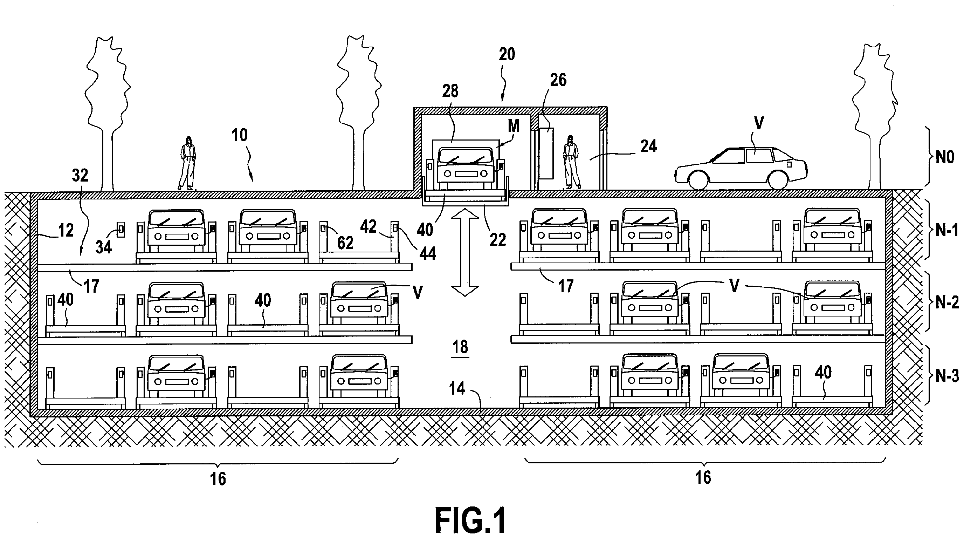

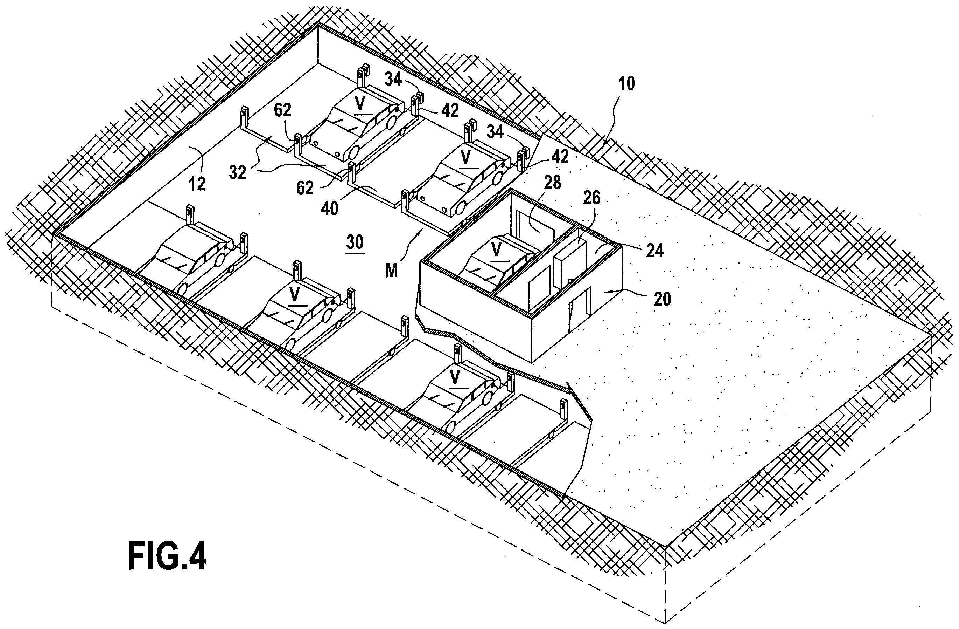

En se référant aux figures 1 à 4, on va décrire un parking selon un exemple de réalisation de l'invention, dans lequel sont destinés à être stationnés des véhicules électriques disponibles à la location. Dans l'exemple, les véhicules stationnés dans le parking 10 sont tous identiques.

Comme le montre mieux la figure 1, selon cet exemple de réalisation, le parking 10 est une construction souterraine qui comporte une paroi externe 12 dont la face externe est bien sûr au contact du sol S. Cette paroi de soutènement 12 peut être réalisée par la technique de parois moulées puis excavation du sol à l'intérieur de la paroi ainsi réalisée ou encore par des systèmes de palplanches ou toute autre technique appropriée. Elle assure généralement l'étanchéité vis-à-vis de l'extérieur et avec le fond 14 de la construction. De préférence, le fond 14 est constitué par un radier qui est raccordé à la paroi externe latérale 12.

Par exemple, cette paroi externe 12 a, en projection horizontale, une forme circulaire, elliptique ou quadrilatérale (rectangulaire ou carré notamment).

Le parking 10 comporte un volume périphérique 16 dans lequel sont réalisés des planchers horizontaux 17 décalés verticalement les uns par rapport aux autres, définissant plusieurs niveaux.

Le parking comporte également une zone centrale de transfert 18, débouchant de la surface du sol par sa partie supérieure.

Il est prévu, dans la zone de transfert 18, un ascenseur 22 desservant la partie hors sol du parking (niveau 0 du parking) ainsi que chaque niveau souterrain (niveaux -1, -2, -3).

La partie hors sol du parking (niveau 0) constitue une zone utilisateur 20. Elle comprend, outre la portion supérieure de la zone de transfert 18 dans laquelle évolue l'ascenseur 22, une zone commerciale 24 accessible aux usagers, équipée d'un ordinateur 26 relié à une unité de commande centrale 80 du parking, leur permettant de réaliser les opérations nécessaires au dépôt et/ou au retrait d'un véhicule. La portion supérieure de la zone de transfert est accessible aux usagers par une porte principale 28, commandée par l'unité de commande centrale 80. Pour des raisons évidentes de sécurité, la porte 28 n'est commandée à l'ouverture que si l'ascenseur 22 est arrêté au niveau 0.

Pour gérer les périodes d'affluence, selon un autre exemple, le parking 10 peut comporter plusieurs zones de transfert 18 et un nombre correspondant de zones commerciales 24. Par exemple, le parking 10 peut comporter au moins une première zone utilisateur dédiée au dépôt de véhicules et au moins une deuxième zone utilisateur dédiée au retrait de véhicules.

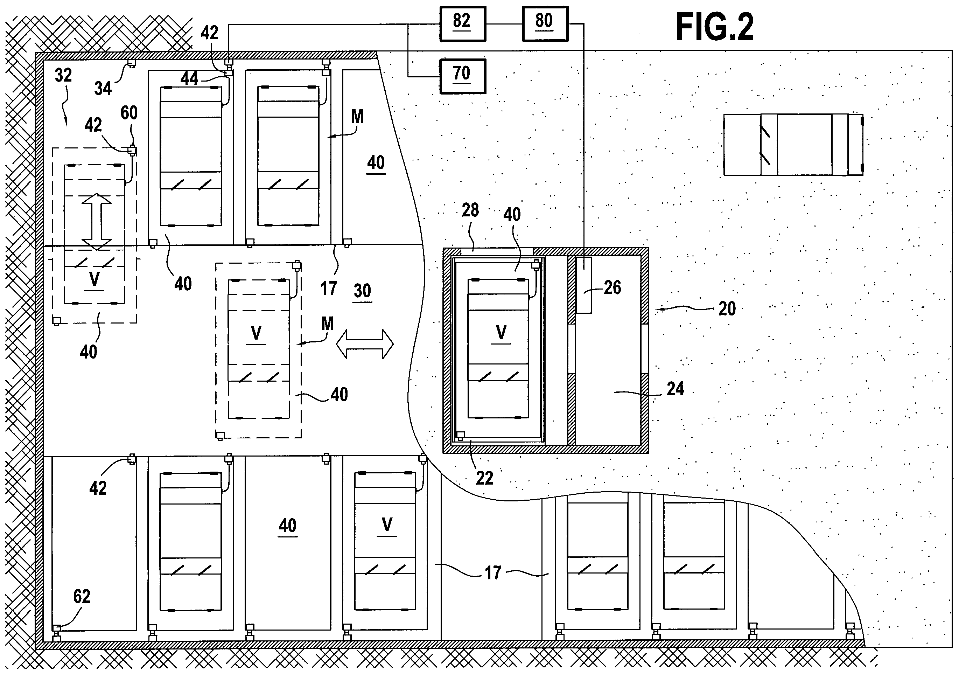

Comme illustré sur la figure 2, au moins une allée centrale 30 est aménagée sur chaque niveau souterrain du parking 10, l'allée centrale 30 s'étendant depuis la zone centrale de transfert 18 en étant bordée par une pluralité d'emplacements de parcage 32 destinés à recevoir des véhicules V.

Le parking 10 selon l'exemple illustré est entièrement automatisé. Pour cela, il comporte une pluralité de plateformes de support mobiles 40 (ci-après plateformes 40), formant interfaces de parcage, dimensionnées de façon à pouvoir supporter chacune au moins un véhicule V, et adaptées pour se déplacer entre les emplacements de parcage 32 et la zone utilisateur 20, ici automatiquement, sous l'effet d'une commande électronique.

Grâce aux dispositions précitées, les opérations de dépose et de retrait de véhicules peuvent être réalisées au niveau de la zone utilisateur 20, le déplacement des véhicules V et leur stationnement sur un emplacement de parcage 32 étant commandés automatiquement par l'unité centrale de commande 80.

Chaque plateforme 40 est par exemple équipée d'une pluralité de roues motrices 46, entraînées par des moteurs 50 alimentés par des batteries 52 montées directement sur la plateforme 40 et commandés, à distance, par l'unité centrale de commande 80.

Selon une variante, la plateforme 40 pourrait aussi être déplacée au moyen de dispositifs externes, des vérins par exemple.

Pour connaître le positionnement de chaque plateforme 40 à l'intérieur du parking et/ou savoir en permanence si une plateforme est chargée ou non, chaque plateforme 40 peut être équipée d'au moins un capteur de positionnement 54 et/ou d'au moins un capteur d'état 56 transmettant en permanence, à une unité de gestion du stationnement 82, les informations de positionnement et d'état relatives à ladite plateforme 40.

Comme indiqué précédemment, le parking 10 est destiné au parcage de véhicules électriques. Les plateformes 40, de même que les emplacements de parcage 32, sont donc équipés pour permettre la recharge des véhicules stationnés.

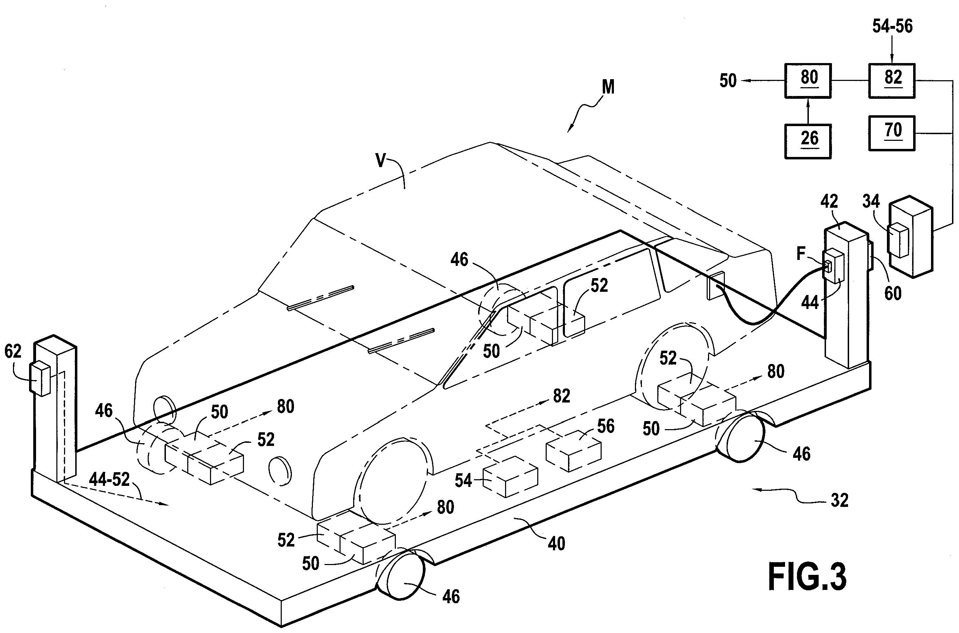

Une plateforme 40 telle qu'illustrée sur la figure 3 a pour particularité de comporter une borne de recharge électrique 42 comprenant ici un connecteur électrique primaire sous la forme d'une prise 44 configurée pour coopérer avec la fiche de recharge F d'un véhicule V.

Comme illustré sur la figure 3, la plateforme 40 comporte, en outre, deux connecteurs électriques secondaires 60, 62 reliés, respectivement, par des conducteurs électriques, à la prise 44. On notera que les batteries 52 des moteurs 50 sont avantageusement reliées au même circuit électrique.

Comme il ressort de la figure 2, chaque emplacement de parcage 32 est équipé d'un connecteur électrique fixe 34, relié à une unité centrale d'alimentation électrique 70.

Lorsque la plateforme est stationnée sur un emplacement 32, l'un de ses connecteurs électriques secondaires 60, 62 est automatiquement relié au connecteur fixe 34 de l'emplacement 32, de sorte que la borne de recharge 42 est alimentée électriquement. La batterie du véhicule V, branchée sur ladite borne 42, est alors en chargement. Dans l'exemple, il en est de même des batteries 52 de la plateforme. On comprend aisément que le fait de prévoir deux connecteurs 60, 62 permet de stationner la plateforme indifféremment des deux côtés de l'allée centrale 30 illustrée sur la figure 2.

La borne de recharge 42 et/ou le connecteur fixe 34 sont adaptés à transmettre à l'unité de gestion du stationnement 82 une information représentative de l'état de charge du véhicule V stationné sur la plateforme 40.

De préférence, l'unité de gestion du stationnement 82 est en outre adaptée à déterminer en permanence quel véhicule stationné dans le parking présente l'état de charge le plus important.

Le fonctionnement du parking 10 va être décrit plus en détail ci-après.

Lorsqu'un usager vient déposer un véhicule V, il en fait la requête au moyen de l'ordinateur 26, qui transmet cette requête à l'unité centrale de commande 80. La porte principale 28 est encore fermée.

L'unité centrale de commande interroge alors l'unité de gestion du stationnement 82 pour savoir quelle plateforme est libre et commande les moteurs 50 associés à la plateforme 40 choisie, ainsi que l'ascenseur 22, pour déplacer la plateforme 40 vers la zone de transfert 18.

Lorsque l'ascenseur 22, portant la plateforme de support 40, arrive au niveau 0, la porte principale 28 s'ouvre. L'usager peut alors venir stationner son véhicule V sur la plateforme et connecter sa fiche de recharge F à la borne électrique 42.

Pour parer à toute négligence de l'utilisateur, le bon branchement du véhicule V peut par exemple conditionner l'arrêt du décompte du temps de location par l'usager.

L'unité centrale de commande 80 commande les moteurs 50 associés à la plateforme et l'ascenseur 22 pour transférer le module de parcage M constitué par la plateforme de support 40 portant le véhicule connecté au connecteur électrique primaire 42, vers son emplacement de parcage 32 initial.

Lorsque la plateforme 40 arrive sur l'emplacement de parcage 34, et comme expliqué précédemment, l'un de ses connecteurs électriques secondaires 60, 62 est connecté automatiquement au connecteur fixe 34. Le véhicule V est alors en chargement, et ses données de chargement sont transmises en permanence à l'unité de gestion de l'état de charge des véhicules 84.

Lorsqu'un usager souhaite retirer un véhicule, il en fait la requête dans l'ordinateur 26, qui transmet la requête à l'unité centrale de commande 80.

L'unité centrale de commande 80 interroge alors l'unité de gestion des plateformes 82 et l'unité de gestion de l'état de charge des véhicules 84 pour connaître celles parmi les plateformes occupées, portant le véhicule V le plus chargé.

L'unité 80 commande alors les moteurs 50 associés à la plateforme 40 choisie, de même que l'ascenseur 22, pour la déplacer vers la zone de transfert 18.

Lorsque l'ascenseur 22, portant la plateforme 40, arrive au niveau 0, la porte principale 28 s'ouvre. L'usager peut alors récupérer son véhicule V sur la plateforme 40. Il déconnecte sa fiche de recharge F de la borne électrique 42 et dégage le véhicule V de la plateforme 40.

## Revendications

1. Parking souterrain (10) pour véhicules électriques (V) comprenant
- une pluralité d'emplacements de parcage (32) comportant chacun un dispositif d'alimentation électrique (34),
- une pluralité d'interfaces de parcage (40), chaque interface de parcage étant adaptée pour être reliée électriquement à un véhicule (V) de manière à former avec lui un module de parcage (M), et
- des moyens automatiques de déplacement de chaque module de parcage (M) entre au moins un emplacement de parcage et une zone utilisateur,
le parking étant configuré de sorte que, lorsqu'un module de parcage (M) se trouve sur un emplacement (32) de parcage, l'interface de parcage (40) dudit module (M) est automatiquement connectée électriquement au dispositif d'alimentation électrique de l'emplacement, et
**caractérisé en ce qu'**il comprend en outre un système (82) de détection de l'état de charge du véhicule (V) de chaque module de parcage (M).

2. Parking selon la revendication 1, dans lequel chaque interface de parcage (40) est munie d'au moins un connecteur électrique primaire (44) adapté pour être relié à un connecteur électrique complémentaire d'un véhicule (V) et au moins un connecteur électrique secondaire (60, 62) relié électriquement au conducteur électrique primaire (42) et adapté pour se connecter électriquement au dispositif d'alimentation (34, 70) d'un emplacement de parcage (32).

3. Parking selon la revendication 1 ou 2, dans lequel chaque interface de parcage (40) comprend une plateforme de support mobile configurée pour recevoir au moins un véhicule (V).

4. Parking (10) selon l'une quelconque des revendications 1 à 3, dans lequel le dispositif d'alimentation électrique comprend un connecteur fixe (34) relié à une unité centrale d'alimentation électrique (70) du parking.

5. Parking (10) selon l'une quelconque des revendications 1 à 4, dans lequel la zone utilisateur (20) est disposée sur un premier niveau (N0) et les emplacements de parcage (32) sont répartis sur au moins un deuxième niveau (N-1) situé en dessous du premier niveau (N0).

6. Parking (10) selon l'une quelconque des revendications 1 à 5, comprenant en outre un système d'identification de la position et de l'état des interfaces de parcages (40).

7. Parking (10) selon l'une quelconque des revendications 1 à 6, comprenant en outre des moyens d'identification du véhicule (V) présentant l'état de charge le plus élevé.

8. Procédé de retrait d'un véhicule électrique (V) stationné dans un parking souterrain (10) selon l'une quelconque des revendications 1 à 7, comprenant une pluralité de modules de parcage (M) comprenant chacun un véhicule (V) et une interface de parcage (40) connectée électriquement audit véhicule (V) et à un dispositif d'alimentation électrique (34, 70), dans lequel
- le véhicule (V) présentant l'état de charge le plus élevé est identifié à l'aide du système (82) de détection de l'état de charge du véhicule (V) de chaque module de parcage (M);
- le module de parcage (M) comprenant le véhicule (V) identifié comme présentant l'état de charge le plus élevé est déplacé automatiquement depuis un emplacement de parcage (32) jusqu'à une zone utilisateur (20), l'interface de parcage (40) étant automatiquement déconnectée dudit dispositif d'alimentation électrique (34, 70) lorsque le module de parcage (M) quitte l'emplacement de parcage (32) ; et
- dans la zone utilisateur (20), le véhicule (V) est déconnecté de l'interface de parcage (40).

## Patentansprüche

1. Tiefgarage (10) für Elektrofahrzeuge (V), umfassend
- eine Vielzahl von Parkplätzen (32), die jeweils eine elektrische Versorgungsvorrichtung (34) aufweisen,
- eine Vielzahl von Parkschnittstellen (40), wobei jede Parkschnittstelle so ausgelegt ist, dass sie elektrisch mit einem Fahrzeug (V) verbunden werden kann, sodass sie mit diesem ein Parkmodul (M) bildet, und
- automatische Mittel zum Bewegen jedes Parkmoduls (M) zwischen mindestens einem Parkplatz und einem Benutzerbereich,
wobei die Tiefgarage so konfiguriert ist, dass, wenn sich ein Parkmodul (M) auf einem Parkplatz (32) befindet, die Parkschnittstelle (40) des Moduls (M) automatisch elektrisch mit der elektrischen Versorgungsvorrichtung des Parkplatzes verbunden wird, und
**dadurch gekennzeichnet, dass** sie ferner ein System (82) zum Erfassen des Ladezustandes des Fahrzeugs (V) jedes Parkmoduls (M) umfasst.

2. Tiefgarage gemäß Anspruch 1, wobei jede Parkschnittstelle (40) mit mindestens einem primären elektrischen Verbinder (44), der dazu ausgelegt, mit einem komplementären elektrischen Verbinder eines Fahrzeugs (V) verbunden zu werden, und mit mindestens einem sekundären elektrischen Verbinder (60, 62) versehen ist, der elektrisch mit dem primären elektrischen Leiter (42) verbunden und dazu ausgelegt ist, elektrisch mit der Stromversorgungsvorrichtung (34, 70) eines Parkplatzes (32) verbunden zu werden.

3. Tiefgarage gemäß Anspruch 1 oder 2, wobei jede Parkschnittstelle (40) eine mobile Trägerplattform umfasst, die dazu ausgelegt ist, mindestens ein Fahrzeug (V) aufzunehmen.

4. Tiefgarage (10) gemäß einem der Ansprüche 1 bis 3, wobei die Stromversorgungsvorrichtung einen festen Verbinder (34) aufweist, der mit einer zentralen Stromversorgungseinheit (70) der Tiefgarage verbunden ist.

5. Tiefgarage (10) gemäß einem der Ansprüche 1 bis 4, wobei der Benutzerbereich (20) auf einer ersten Ebene (N0) angeordnet ist und die Parkplätze (32) über mindestens eine zweite Ebene (N-1) unterhalb der ersten Ebene (N0) verteilt sind.

6. Tiefgarage (10) gemäß einem der Ansprüche 1 bis 5, ferner umfassend ein System zur Identifizierung der Position und des Zustands der Parkschnittstellen (40).

7. Tiefgarage (10) gemäß einem der Ansprüche 1 bis 6, ferner umfassend Mittel zur Identifizierung des Fahrzeugs (V) mit dem höchsten Ladezustand.

8. Verfahren zum Rückführen eines Elektrofahrzeugs (V), das in einer Tiefgarage (10) gemäß einem der Ansprüche 1 bis 7 geparkt ist, umfassend eine Vielzahl von Parkmodulen (M), die jeweils ein Fahrzeug (V) und eine Parkschnittstelle (40) umfassen, die elektrisch mit dem Fahrzeug (V) und einer elektrischen Stromversorgungsvorrichtung (34, 70) verbunden sind, wobei
- das Fahrzeug (V) mit dem höchsten Ladezustand mittels des Systems (82) zur Erfassung des Ladezustands des Fahrzeug (V) jedes Parkmoduls (M) identifiziert wird,
- das Parkmodul (M) mit dem Fahrzeug (V), das als das Fahrzeug mit dem höchsten Ladezustand identifiziert wurde, automatisch von einem Parkplatz (32) zu einem Benutzerbereich (20) bewegt wird, wobei die Parkschnittstelle (40) automatisch von der Stromversorgungsvorrichtung (34, 70) getrennt wird, wenn das Parkmodul (M) den Parkplatz (32) verlässt, und
- im Benutzerbereich (20) das Fahrzeug (V) von der Parkschnittstelle (40) getrennt wird.

## Claims

1. An underground carpark (10) for electric vehicles (V), the carpark comprising:
• a plurality of parking places (32), each having an electrical power supply device (34);
• a plurality of parking interfaces (40), each parking interface being adapted to be electrically connected to a vehicle (V) in such a manner as to cooperate therewith to form a parking module (M); and
• automatic means for moving each parking module (M) between each at least one parking place and a user zone;
the carpark being configured in such a manner that when a parking module (M) is on a parking place (32), the parking interface (40) of said module (M) is automatically electrically connected to the electrical power supply device of the parking place; and
the carpark being **characterized in that** it further comprises a system (82) for detecting the state of charge of the vehicle (V) of each parking module (M).

2. A carpark according to claim 1, wherein each parking interface (40) is provided with at least one primary electrical connector (44) adapted to be connected to a complementary electrical connector of a vehicle (V), and at least one secondary electrical connector (60, 62) that is electrically connected to the primary electrical conductor (42) and that is adapted to connect itself electrically to the power supply device (34, 70) of a parking place (32).

3. A carpark according to claim 1 or claim 2, wherein each parking interface (40) comprises a movable support platform configured to receive at least one vehicle (V).

4. A carpark (10) according to any one of claims 1 to 3, wherein the electrical power supply device comprises a stationary connector (34) connected to a central electricity power supply unit (70) of the carpark.

5. A carpark (10) according to any one of claims 1 to 4, wherein the user zone (20) is arranged on a first level (N0) and the parking places (32) are distributed over at least one second level (N-1) situated below the first level (N0).

6. A carpark (10) according to any one of claims 1 to 5, further including a system for identifying the positions and the states of each of the parking interfaces (40).

7. A carpark (10) according to any one of claims 1 to 6, further including means for identifying the vehicle (V) that presents the greatest state of charge.

8. A method of withdrawing an electric vehicle (V) parked in an underground carpark (10) according to any one of claims 1 to 7 having a plurality of parking modules (M), each comprising a vehicle (V) and a parking interface (40) electrically connected to said vehicle (V) and to an electricity power supply device (34, 70), wherein:
• the vehicle (V) presenting the greatest state of charge is identified using the system (82) for detecting the state of charge of the vehicle (V) of each parking module (M);
• the parking module (M) having the vehicle (V) identified as presenting the greatest state of charge from a parking place (32) is automatically moved to a user zone (20), the parking interface (40) being automatically disconnected from said electrical power supply device (34, 70) when the parking module (M) leaves the parking place (32); and
• the vehicle (V) is disconnected from the parking interface (40) in the user zone (20).
